Europäisches Patentamt

European Patent Office

Office européen des brevets

(11) Publication number: **0 351 197**
**A2**

# (12) EUROPEAN PATENT APPLICATION

(21) Application number: **89307051.6**

(22) Date of filing: **11.07.89**

(51) Int. Cl.⁵: **B 01 D 53/36**

(30) Priority: **13.07.88 GB 8816667**

(43) Date of publication of application:
**17.01.90 Bulletin 90/03**

(84) Designated Contracting States:
**AT BE CH DE ES FR GB GR IT LI LU NL SE**

(71) Applicant: **JOHNSON MATTHEY PUBLIC LIMITED COMPANY**
**78 Hatton Garden**
**London, EC1N 8JP (GB)**

(72) Inventor: **Cooper, Barry John**
**265 Gulph Hills Road**
**Radnor Pennsylvania 19087 (US)**

**Harrison, Brian**
**21 St Leonard's Close**
**Watlington Oxon OX9 5PQ (GB)**

**Diwell, Alan Francis**
**"Newhaven" Blounts Court Road**
**Sonning Common Reading RG4 9RS (GB)**

(74) Representative: **Brewer, Leonard Stuart et al**
**Patents Department Johnson Matthey Technology**
**Centre Blounts Court Sonning Common**
**Reading Berkshire RG4 9NH (GB)**

(54) Improvements in pollution control.

(57) Pollutants from the exhaust of a lean running internal combustion engine are reduced by the engine having an exhaust catalyst capable of oxidising hydrocarbons and carbon monoxide and reducing $NO_x$ to nitrogen and being fitted with engine management means arranged to provide transient additional enrichment during periods of acceleration. A novel exhaust catalyst for this purpose is carried by a washcoat and is capable of oxidising hydrocarbons and carbon monoxide and reducing $NO_x$ to nitrogen and contains in addition 0.1 - 20% by weight of iron based on the total weight of catalyst and washcoat.

Description

## IMPROVEMENTS IN POLLUTION CONTROL

This invention concerns improvements in pollution control. More especially it concerns improvements in the control of vehicle exhaust emissions.

Current concerns with pollution of the environment by internal combustion engines have led to emission standards for vehicles being set for various states, countries and the European Economic Community. These increasingly require reductions in the emissions of unburnt hydrocarbons and $NO_x$ as well as carbon monoxide, and effective exhaust catalysts have been developed to give the necessary low emissions from motor cars. Attention has also been focussed on the so-called "lean-burn" engine, which operates at significantly higher air to fuel ratios, that is greater than 18:1. Air to fuel ratios quoted herein are by weight. These engines are intended to give low fuel consumptions and low emissions. However, the variations in engine speed and load met with in ordinary driving conditions can give average emissions higher than the emission standards, so that the use of an exhaust catalyst is likely to be required, especially with larger engine sizes.

We have now discovered how the exhaust emissions, particularly of $NO_x$, of lean running internal combustion engines can be reduced.

Accordingly, the invention provides a lean running internal combustion engine having an exhaust catalyst capable of oxidising hydrocarbons and carbon monoxide and reducing $NO_x$ to nitrogen and fitted with engine management means arranged to provide transient additional enrichment during periods of acceleration.

The invention further provides a method of operating a lean running internal combustion engine, which method comprises treating its exhaust gases with a catalyst capable of oxidising hydrocarbons and carbon monoxide and reducing $NO_x$ to nitrogen and managing the engine to provide transient additional enrichment during periods of acceleration.

The invention also provides an exhaust catalyst for an internal combustion engine, which catalyst is carried by a washcoat and is capable of oxidising hydrocarbons and carbon monoxide and reducing $NO_x$ to nitrogen, and which contains in addition 0.1-20% by weight of iron based on the total weight of catalyst and washcoat.

Internal combustion engines have a stoichiometric ratio of air to fuel, at which all the fuel is theoretically burnt to carbon dioxide and water. Engines which are adapted to operate with less fuel than this (ie whose air to fuel ratio is higher) are lean running engines. During a period of acceleration, more fuel is delivered to the engine. The air to fuel ratio initially falls, ie there is enrichment, but then rises to the nominal air to fuel ratio during the period of acceleration (if it is long enough) as the engine adapts. It is during these periods of enrichment of lean running engines that $NO_x$ emissions particularly occur. We have discovered, however, that by providing transient additional enrichment during such periods of acceleration, the $NO_x$ emissions are surprisingly reduced if an exhaust catalyst is employed which is capable of oxidising hydrocarbons and carbon monoxide and reducing $NO_x$ to nitrogen. The same catalyst without this engine control feature reduces $NO_x$ emissions to some extent, but with this surprising engine control feature in addition, the $NO_x$ emissions are reduced substantially further.

For instance, an internal combustion engine whose fuel is petrol has a stoichiometric ratio of air to fuel of 14.6:1. Lean running petrol engines are adapted to run at an average air to fuel ratio higher than this. If such an engine is operating at an air to fuel ratio of say 18.5:1 under cruise conditions, and then accelerated, more fuel is then delivered to the engine and the air to fuel ratio initially falls, ie there is enrichment, say to a ratio of 15.3:1. This enrichment results in increased $NO_x$ emissions. These can be combatted to some extent by employing an exhaust catalyst which is capable of oxidising hydrocarbons and carbon monoxide and reducing $NO_x$ to nitrogen, but the $NO_x$ emissions are reduced substantially further by in addition making the ratio surprisingly even richer transiently, say to a ratio of 14.6:1.

Thus, in a particular embodiment, the invention provides an internal combustion engine operating at an average air to fuel ratio in excess of 15:1, having an exhaust catalyst capable of oxidising hydrocarbons and carbon monoxide and reducing $NO_x$ to nitrogen and fitted with engine management means arranged to provide transient additional enrichment during periods of acceleration. Similarly, in a particular embodiment, the invention provides a method of operating an internal combustion engine at an average air to fuel ratio in excess of 15:1, comprising the treatment of the exhaust gases with a catalyst capable of oxidising hydrocarbons and carbon monoxide and reducing $NO_x$ to nitrogen and managing the engine to provide transient additional enrichment during periods of acceleration.

In the present invention, the transient additional enrichments are desirably of a duration less than 2.5 seconds, and preferably in the range 1.5 - 2 seconds, for instance for catalysts containing normal quantities of ceria. The preferred intervals between the successive transient additional enrichments vary according to driving requirements.

The invention is applicable particularly to lean running internal combustion engines whose fuel is petrol, and is described herein particularly with reference thereto.

The benefits of the present invention arise from a reduction in total $NO_x$ emissions. Preferably, the engine is a petrol engine and is operated at lean air to fuel ratios of 16 to 20:1, more preferably 17 to 19:1, under cruise conditions. Enrichment is required for acceleration, but the invention requires greater enrichment. Excessive enrichment during acceleration, however, is found to give significant increases in hydrocarbon and CO emissions and is desirably avoided.

The additional enrichment is down to an air to fuel ratio at which the $NO_x$ emissions are reduced when employing a particular catalyst. Preferably, this is down to an air to fuel ratio within 4%, preferably within 2%, either side of the stoichiometric ratio, for instance down to the stoichiometric ratio itself.

The preferred degree of enrichment varies according to engine design and catalyst chosen, but tests on a petrol engine have shown good results with an enrichment to not richer than 14:1, for example at a base lean running mixture of 18.5:1.

The catalyst used preferably includes a component capable of "storing" oxygen and releasing it to oxidise hydrocarbons and CO during the transient additional enrichment, during which the $NO_x$ is reduced to nitrogen, and desirably is formulated to extend the $NO_x$ reduction into the lean running periods. Metal oxides, especially ceria, and mixed metal oxides such as the perovskites for instance lanthanum-barium-cobalt oxide eg $La_{0.8}Ba_{0.2}CoO_3$ have been observed to have this effect, and desirably form one catalyst component. Other catalyst components are necessary to favour oxidation of hydrocarbons and carbon monoxide, and preferably include one or more platinum group metals, such as platinum, rhodium, palladium. Preferably the catalyst comprises platinum and rhodium. Other components such as transition metals or their oxides may desirably be included. The catalysts may be prepared by standard industrial methods. For example, a ceramic or metal monolithic catalyst support, or particulate support, may be coated with a washcoat such as alumina, optionally incorporating the oxygen storage component such as ceria, and the other active catalyst components deposited on the washcoat, in manner known per se.

The exhaust catalyst can be one known per se. The invention provides however a novel catalyst applicable to the present method and engine. This is an exhaust catalyst for an internal combustion engine, which catalyst is carried by a washcoat and is capable of oxidising hydrocarbons and carbon monoxide and reducing $NO_x$ to nitrogen, and which contains in addition 0.1-20% by weight of iron based on the total weight of catalyst and washcoat. This novel catalyst can be prepared in a manner known per se. Its iron content can be for instance 1%.

Engine management systems controlling air/fuel ratios are known and are frequently used in cars for the US market. Basically, a microprocessor can be employed to receive signals from a variety of sensors such as temperature, oxygen content of exhaust, pressure, etc, and vary the air to fuel ratio according to a preset strategy, generally to limit exhaust emissions. It is possible to trigger the initiation of the transient additional enrichments in the present invention in response to inlet manifold pressure change. The skilled person can use suitable engine management means to detect other suitable conditions for initiating, and terminating, the transient additional enrichments.

The invention will now be described with reference to working Examples which are intended for illustrative purposes only.


## EXAMPLES 1 & 2


A Volkswagen Jetta Series 1 motor car was fitted with a prototype lean-burn (18.5:1 Air/Fuel) 1500cc engine, a catalytic convertor and a programmable commercial engine management controller. Initial microreactor tests had selected a commercial Three-Way Catalyst (TWC) containing Pt/Fh (5: 1) on a washcoat and such a TWC modified by containing in addition 1% by weight of iron (elemental) based on the total weight of Pt, Rh and washcoat (Catalyst A). The washcoat was a mixture of ceria and alumina containing 25% by weight ceria and was carried on a monolith. Samples of the TWC and Catalyst A were loaded into catalytic convertor cans and the motor car was run on a rolling road over the European ECE-15 and US LA4 test cycles. The test cycles were carried out according to the invention, using catalyst and engine management, with the catalyst alone, with the engine management alone (in two runs only) and compared to the test run on the unmodified engine. The engine management controller was programmed to provide additional enrichment to an air to fuel ratio of 14.5:1 for 1.5 seconds when the inlet manifold pressure rose above 600 mbar. If a short acceleration were followed by conditions of over-run, it would have been undesirable to continue the particular transient enrichment; accordingly, in the particular strategy chosen to programme the controller, the particular transient additional enrichment was terminated if the inlet manifold pressure dropped below 280 mbar. It would have been undesirable for additional enrichment to trip continually in response to small changes in manifold pressure during high speed cruising at a fairly steady inlet manifold pressure around 600 mbar; accordingly, the controller was programmed so that when the pressure fell below 600 mbar, another transient additional enrichment was not initiated until the pressure had dropped below a 550 mbar reset level. The controller also provided full throttle enrichment at inlet manifold pressures above 900 mbar, but did not permit double enrichment.

The results are shown in Tables 1 and 2.

It can be seen that the present invention permits a useful reduction in $NO_x$ and high HC conversions, compared to the vehicle operating with the lean burn engine. The vehicle according to the invention is well within the emission limits. Tests of fuel consumption indicate a 1% penalty, which is considered minimal, and subjective impressions are of improved driveability. It is considered that further improvements within the invention could be obtained by including a feedback fuel management system in the engine control means, and by further modifications to the particular catalyst formulation.

## TABLE 1

### ECE-15 (COLD START) EVALUATION

(a) Three-Way Catalyst

| | Without Engine Control | Percentage Change | With Engine Control |
|---|---|---|---|
| Without Catalyst | HC  11.480 g/test<br>$NO_x$  3.963 g/test<br>CO  28.750 g/test | HC(-2.8%)$NO_x$(+13%) ————————→ CO(-9.0%) | HC 11.160g/test<br>$NO_x$ 4.464g/test<br>CO 26.170g/test |
| Percentage Change | HC  (-85%)<br>$NO_x$  (-2.4%)<br>CO  (-60%) ↓ | HC  (-85%)<br>$NO_x$  (-13%)<br>CO  (-51%) ↘ | HC  (-85%)<br>$NO_x$  (-23%)<br>CO  (-46%) ↓ |
| With Catalyst TWC | HC  1.690 g/test<br>$NO_x$  3.867 g/test<br>CO  11.416 g/test | HC(+1.3%)$NO_x$(-11%) ————————→ CO (+24%) | HC  1.712g/test<br>$NO_x$ 3.448g/test<br>CO 14.166g/test |

(b) Catalyst A

| | Without Engine Control | Percentage Change | With Engine Control |
|---|---|---|---|
| Without Catalyst | HC  11.724 g/test<br>$NO_x$  5.942 g/test<br>CO  15.859 g/test | | Not run |
| Percentage Change | HC  (-84%)<br>$NO_x$  (-16%)<br>CO  (-34%) ↓ | HC  (-85%)<br>$NO_x$  (-29%)<br>CO  (-22%) ↘ | |
| With Catalyst A | HC  1.89  g/test<br>$NO_x$  4.97  g/test<br>CO  10.52  g/test | HC(-11%)$NO_x$(-15%) ————————→ CO (+18%) | HC  1.69g/test<br>$NO_x$ 4.20g/test<br>CO 12.41g/test |

## TABLE 2

### LA4 (COLD START) EVALUATION

#### (a) Three-Way Catalyst

| | Without Engine Control | Percentage Change | With Engine Control |
|---|---|---|---|
| Without Catalyst | HC 3.983 g/mile<br>$NO_x$ 2.282 g/mile<br>CO 3.559 g/mile | HC(−23%) $NO_x$(+16%) ⟶<br>CO(+36%) | HC 3.082 g/mile<br>$NO_x$ 2.652 g/mile<br>CO 4.849 g/mile |
| Percentage Change | HC (−93%)<br>$NO_x$ (−10%)<br>CO (−68%) ↓ | HC (−95%)<br>$NO_x$ (−20%)<br>CO (−68%) ↘ | HC (−94%)<br>$NO_x$ (−31%)<br>CO (−76%) ↓ |
| With Catalyst TWC | HC 0.265 g/mile<br>$NO_x$ 2.051 g/mile<br>CO 1.143 g/mile | HC(−25%) $NO_x$(−11%) ⟶<br>CO (+1%) | HC 0.200 g/mile<br>$NO_x$ 1.831 g/mile<br>CO 1.153 g/mile |

#### (b) Catalyst A

| | Without Engine Control | Percentage Change | With Engine Control |
|---|---|---|---|
| Without Catalyst | HC 3.07 g/mile<br>$NO_x$ 2.50 g/mile<br>CO 2.46 g/mile | | Not run |
| Percentage Change | HC (−93%)<br>$NO_x$ (−3.2%)<br>CO (−79%) ↓ | HC (−90%)<br>$NO_x$ (−16%)<br>CO (−19%) ↘ | |
| With Catalyst A | HC 0.229 g/mile<br>$NO_x$ 2.42 g/mile<br>CO 0.510 g/mile | HC(+28%) $NO_x$(−13%) ⟶<br>CO (+292%) | HC 0.293 g/mile<br>$NO_x$ 2.11 g/mile<br>CO 2.00 g/mile |

5

**Claims**

1. A lean running internal combustion engine, having an exhaust catalyst capable of oxidising hydrocarbons and carbon monoxide and reducing $NO_x$ to nitrogen and fitted with engine management means arranged to provide transient additional enrichment during periods of acceleration.

2. An engine according to claim 1 wherein the additional enrichment is down to an air to fuel ratio within 4% either side of the stoichiometric ratio.

3. An engine according to claim 1 or 2 whose fuel is petrol.

4. An engine according to claim 3 adapted to operate at an air to fuel ratio of 16 to 20:1 under cruise conditions.

5. An engine according to any one of the preceding claims wherein the transient additional enrichment is of a duration less than 2.5 seconds.

6. An engine according to any one of the preceding claims wherein the catalyst comprises platinum and rhodium.

7. An engine according to any one of the preceding claims wherein the catalyst contains in addition a component capable of storing oxygen, and releasing it to oxidise hydrocarbons and carbon monoxide during the transient additional enrichment.

8. An engine according to claim 7 wherein the component comprises ceria.

9. A method of operating a lean running internal combustion engine, which method comprises treating its exhaust gases with a catalyst capable of oxidising hydrocarbons and carbon monoxide and reducing $NO_x$ to nitrogen and managing the engine to provide transient additional enrichment during periods of acceleration.

10. An exhaust catalyst for an internal combustion engine, which catalyst is carried by a washcoat and is capable of oxidising hydrocarbons and carbon monoxide and reducing $NO_x$ to nitrogen, and which contains in addition 0.1-20% by weight of iron based on the total weight of catalyst and washcoat.